# EUROPEAN PATENT APPLICATION

(11) **EP 3 468 148 A1**
(43) Date of publication of application: **10.04.2019**
(21) Application number: 18199196.9
(22) Date of filing: 08.10.2018
(51) Int. Cl.: H04L 29/06

(54) **SYSTEMS AND METHODS FOR ENHANCED VEHICLE OPERATOR CONNECTIVITY TO EXTERNAL NETWORKS AND ONBOARD SYSTEMS VIA SINGLE ACCESS POINT**

(30) Priority: 09.10.2017 IN 201711035743; 14.02.2018 US 201815896802
(71) Applicant: Honeywell International Inc., Morris Plains, NJ New Jersey 07950 (US)
(72) Inventor: RAJE, Anup, Morris Plains, New Jersey 07950 (US); DAIRMAN, Charles, Morris Plains, New Jersey 07950 (US); GOLDSTEIN, David B., Morris Plains, New Jersey 07950 (US)
(74) Representative: Houghton, Mark Phillip

(57) **Abstract**

A system, vehicle and method for enhanced vehicle operator connectivity to external networks and onboard systems via a single access point are disclosed. For example, a method for enhanced vehicle operator connectivity is disclosed. The method includes communicating with the Internet through a communications access point onboard a vehicle, communicating with a server external to the vehicle through the communications access point and the Internet, and communicating with an electronics system onboard the vehicle through the communications access point, the Internet and the server.

## Description

### BACKGROUND

When pilots or other crew members utilize their wireless communication devices (e.g., iPads, tablets, handheld devices, personal computers or PCs) in flight to connect to an avionics WiFi access point, they are able to interface with the avionics equipment onboard but are unable to access the open Internet with its services due to cyber security considerations and concerns. On the other hand, when pilots or other crew members utilize their wireless communication devices to connect to a cabin WiFi access point, they are able to access the Internet with its services but are unable to access the avionics equipment at the same time. Consequently, pilots or other crew members are required to manually switch between the avionics and cabin WiFi access points to reach either the avionics' functions or Internet services they desire. However, this requirement significantly impacts the overall user experiences of the pilots or other crew members during flights, and often forces them to retain or remember the numerous login credentials needed to access the multiple services desired.

For the reasons stated above and for other reasons stated below which will become apparent to those skilled in the art upon reading and understanding the specification, there is a need in the art for a system and method that enables pilots or other crew members to connect their wireless (or wired) devices to the avionics equipment and Internet services utilizing a single, communications access point.

### SUMMARY

Systems and methods are provided to enable vehicle operators, such as aircraft crew members, to connect their wireless (or wired) communication devices, such as iPads, tablets, personal computers and the like, to both the Internet and onboard electronics (e.g., avionics) systems via a single, communications access point onboard the vehicle.

### DRAWINGS

Embodiments of the present disclosure can be more easily understood and further advantages and uses thereof more readily apparent, when considered in view of the description of the preferred embodiments and the following figures in which:
FIG. 1 is a diagram illustrating a system that can be utilized to implement one example embodiment of the present invention.
FIG. 2 is a diagram illustrating a second system that can be utilized to implement one example embodiment of the present invention.
FIG. 3 is a diagram illustrating a third system that can be utilized to implement one example embodiment of the present invention.
FIG. 4 is a flow diagram illustrating a method that can be utilized to implement one example embodiment of the present invention.
FIG. 5 is a flow diagram illustrating a second method that can be utilized to implement one example embodiment of the present invention.
FIG. 6 is a flow diagram illustrating a third method that can be utilized to implement one example embodiment of the present invention.

In accordance with common practice, the various described features are not drawn to scale but are drawn to emphasize features relevant to the present disclosure. Reference characters denote like elements throughout the figures and text.

### DETAILED DESCRIPTION

In the following detailed description, reference is made to the accompanying drawings that form a part hereof, and in which is shown by way of specific illustrative embodiments in which the embodiments may be practiced. These embodiments are described in sufficient detail to enable those skilled in the art to practice the embodiments, and it is to be understood that other embodiments may be utilized and that logical, mechanical and electrical changes may be made without departing from the scope of the present disclosure. The following detailed description is, therefore, not to be taken in a limiting sense.

Embodiments disclosed herein present techniques that enable operators (e.g., pilots and other crew members) of vehicles, such as aircraft in flight, to connect their handheld communications devices (e.g., iPads, tablets, personal computers) to the Internet and onboard avionics systems using a single communications (e.g., WiFi, Bluetooth, Zigbee and the like) access point. In one embodiment of the disclosure, a system is provided that enables a pilot or other crew member to connect a wireless (e.g., WiFi) communications device to an aircraft cabin communications (e.g., WiFi) access point, and thereby gain access to the Internet and the services it provides. Additionally, the same connection to the cabin access point also enables the pilot or other crew member to connect the wireless device, via the cabin access point, to a suitable (e.g., server) network external to the aircraft. This additional connectivity enables the pilot or other crew member to register a request with the external network to enable access to the aircraft's onboard electronics (e.g., avionics) system. In response, the external network validates the registration request to ensure that the identity of the requester is correct and the request is thus valid. If the request is valid, the external network re-routes the request to that aircraft's onboard electronics system via a previously established secure channel.

Notably, in accordance with one embodiment of the disclosure, the exemplary system eliminates the existing requirement for pilots or other crew members to manually input multiple passwords and/or multiple WiFi Service Set Identifiers (SSIDs) so the wireless devices can access both the Internet services and avionics' functions desired. More precisely, the system enables the pilots or other crew members to utilize their wireless devices to access the onboard avionics indirectly via the external network. Notably, the exemplary system can also implement the registration request and access process in reverse, for example, in order to send data that originates in the onboard (e.g., avionics) system to the pilots' or other crew members' wireless devices.

In accordance with one embodiment of the disclosure, the external network can be a ground-based server (e.g., an Internet Service Provider or ISP ground server) that can be readily accessed over the open (e.g., unsecured) Internet. As such, the wireless devices can be connected to the ground-based server so the avionics registration requests can be made. The network or ground-based server can then verify the identities of the requesters and the validity of the requests, and upload each valid request to the requesting aircraft via a secure channel (e.g., via a Virtual Private Network or VPN).

For example, in accordance one embodiment of the disclosure, in order to verify the identity of a requester and/or the validity of a registration request, a correlation can be made between a pilot's or other crew member's wireless device and the security certificates installed on the device. Also, a correlation between the pilot's or other crew member's wireless device and the avionics system onboard the aircraft can be made by, for example, grouping the various serial numbers of the wireless devices with the tail number or serial number of the aircraft.

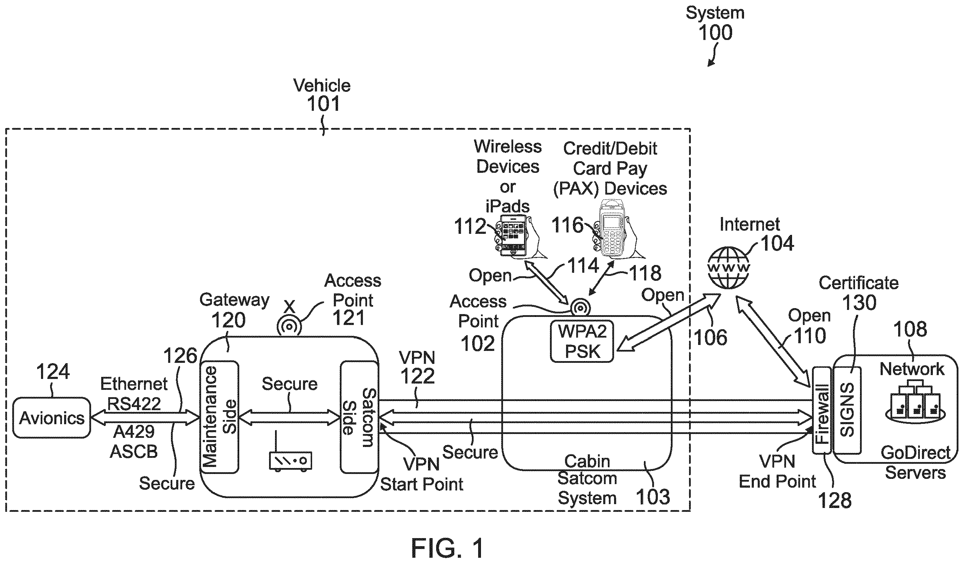

FIG. 1 is a diagram illustrating a system 100, which can be utilized to implement one example embodiment of the present invention. For example, the exemplary system 100 can be utilized by a vehicle operator (e.g., aircraft pilot or other crew member) to access the Internet and one or more onboard systems (e.g., avionics system) via a single communications (e.g., wireless or wired) access point. Referring to the example embodiment illustrated in FIG. 1, system 100 includes a cabin access point 102 which, in this embodiment, is a two-way (e.g., input/output) communications port of a satellite communications (SATCOM) system 103 onboard a vehicle (e.g., aircraft) 101. In this illustrative embodiment, the SATCOM system 103 is configured as a combination of SATCOM and cabin routers, or a cabin SATCOM system 103. The cabin SATCOM system 103 operatively communicates with the Internet (e.g., World Wide Web or other suitable global communications and/or data network) 104 via an open (e.g., unsecured) SATCOM link 106. The Internet 104 operatively communicates with a ground-based (e.g., server) network 108 via an open communications link 110. One or more wireless devices (e.g., crew members' iPads, tablets, personal computers) 112 can operatively communicate with the cabin access point 102 via an open communications link 114. In one example embodiment, the cabin access point 102 is a password protected access point (e.g., utilizing WiFi Protected Access 2-Pre-Shared Key or WPA2-PSK). Also, in one embodiment, one or more secure payment credit card or debit card terminals or devices 116 can operatively communicate with the cabin access point 102 via a second (e.g., wireless) link 118. Notably, although the secure payment credit card or debit card terminals or devices 116 appear structurally similar to the wireless devices 112, in one embodiment, the devices 116 are passengers' wireless devices (e.g., tablets, mobile phones, portable computer devices and the like) that are not utilized by the pilots or other crew members.

The system 100 also includes an Onboard Gateway 120 with a second WiFi access point 121, which is not accessible while in flight (e.g., if utilizing WPA2-PSK authentication). The Onboard Gateway 120 operatively communicates with the cabin SATCOM 103 and the ground-based server 108 via a secure communications link (e.g., VPN) 122. The Onboard Gateway 120 also operatively communicates with an onboard electronics (e.g., avionics) system 124 via a secure communications link 126. In one embodiment, the secure communications link 126 can be, for example, an Ethernet, RS422, A429, or Avionics Standard Communications Bus (ASCB) secure communications link. In a second embodiment, the secure communications link 126 can be a wireless communications link. For example, the Onboard Gateway 120 can function as a client and provide a wireless connection to the electronics (e.g., avionics) system 124.

In one example operation of system 100, the one or more wireless devices or iPads 112 can be connected to the cabin WiFi access point 102 via the link 114, by providing an acceptable (e.g., WPA2-PSK) password. However, in order for an iPad 112 to access the avionics system 124, the iPad 112 must first access the firewall 128 of the ground-based network or server 108 by providing an acceptable signing certificate 130 (or other suitable form of authentication) to verify the identity of the iPad 112 requesting the access. Notably, the wireless devices or iPads 112 are unable to access the Onboard Gateway 120 and thus the avionics system 124 directly while the aircraft is in flight. However, as described above, the wireless devices or iPads 112 are able to access the open Internet services via the cabin access point 102 and the open link 106 while the aircraft is in flight.

On the other hand, the (e.g., avionics) applications in the wireless devices or iPads 112 are able to access the electronics system 124 using a signing certificate 130 to access the ground-based (e.g., server) network 108. The ground-based network 108 can relay requests and data from authorized or approved iPads 112 to the electronics system 124 via the Onboard Gateway 120. Notably, the bi-directional communications between the ground-based server 108 and the Onboard Gateway 120 are secured within the secure communications link (e.g., VPN or other suitable, secure communications link) 122 as the communications pass through the cabin SATCOM system 103. As such, in this embodiment, the authorized communications between the ground-based network 108 and the electronics system 124 are carried entirely on secure communications links.

One advantage of system 100 is that it provides a single SSID-based connection for vehicle operators (e.g., pilots and other crew members) to access both the Internet services and the electronics system. However, for this embodiment, the operators have to make their wireless connections via a password protected (e.g., WPA2-PSK) link, which requires the operators to retain or remember more than one password (e.g., a different password for each vehicle in the fleet). Also, in order for the operators' wireless devices to access avionics data, the data has to be relayed to the operators' devices via the ground-based network, instead of being directly available to the operators' wireless devices on the vehicle involved.

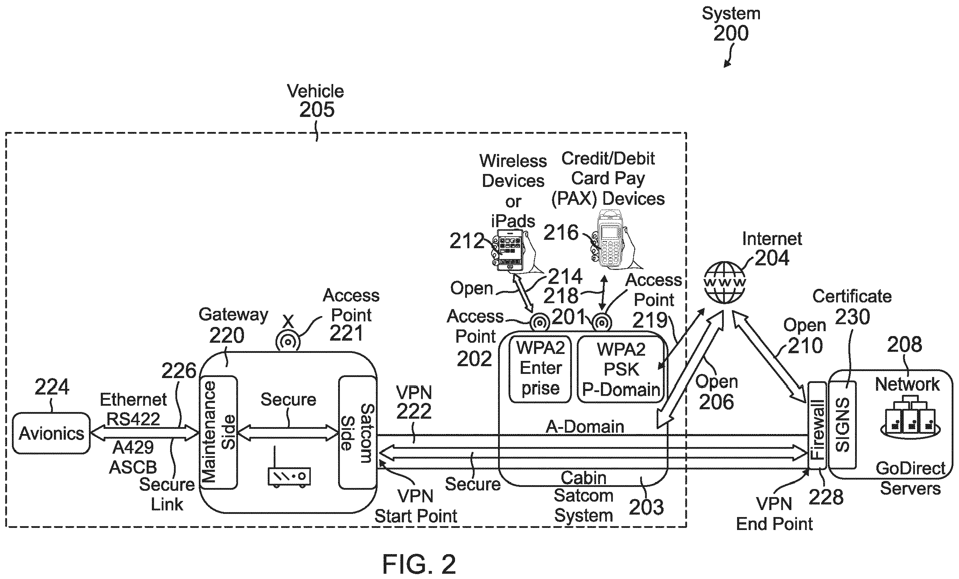

FIG. 2 is a diagram illustrating a second system 200, which can be utilized to implement one example embodiment of the present invention. For example, the exemplary system 200 can be utilized by a vehicle operator (e.g., aircraft pilot or other crew member) to access the Internet and one or more onboard electronic systems (e.g., avionics system) via a single communications (e.g., wireless) access point. As such, referring to the example embodiment illustrated in FIG. 2, system 200 includes a first cabin access point 201 in a cabin SATCOM system 203 that can provide seamless and reliable connectivity, satellite communications worldwide. In this embodiment, the first cabin access point 201 is a two-way (e.g., input/output) communications port of the SATCOM system 203 onboard a vehicle (e.g., aircraft) 205. System 200 also includes a second cabin access point 202, which is a second, two-way (e.g., input/output) communications port of the SATCOM system 203. The cabin SATCOM system 203 operatively communicates with the Internet (e.g., World Wide Web or other suitable global communication and/or data network) 204 via an open (unsecured) SATCOM link 206. The Internet 204 operatively communicates with a ground-based or Cloud-based network (e.g., server) 208 via an open communication link 210. One or more pilot iPads 212 can operatively communicate (wirelessly) with the cabin (e.g., WiFi) access point 202 via an open communication link 214. However, in this illustrative embodiment, the cabin access point 202 is a WPA2 Enterprise certificate-protected access point. Consequently, the one or more iPads 212 can be connected to the cabin WiFi access point 202 only utilizing, for example, WPA2-Enterprise certificates. Also, one or more credit or debit card payment terminals or devices 216 can operatively communicate (e.g., wirelessly) with the cabin WiFi access point 201 via a second wireless link 218. In one embodiment, the cabin WiFi access point 201 is a password protected access point (e.g., using WPA2-PSK). Notably, although the secure payment credit card or debit card terminals or devices 216 appear structurally similar to the wireless devices 212, in one embodiment, the devices 116 are passengers' wireless devices (e.g., tablets, mobile phones, portable computer devices and the like) that are not utilized by the pilots or other crew members.

The system 200 also includes an Onboard Gateway 220. The Onboard Gateway 220 operatively communicates with the cabin SATCOM system 203 and the ground-based or Cloud-based network 208 via a secure communications link (e.g., VPN) 222. The Onboard Gateway 220 also operatively communicates with an onboard electronics system 224 via a secure communications link 226. The secure communications link 226 can be, for example, an Ethernet, RS422, A429, or ASCB secure communications link. In a second embodiment, the cabin WiFi access point 201 (or 202) can be a wired communications access point, and the one or more wireless devices 216 (or 212) can be wired communications devices instead.

In an example operation of system 200, the one or more wireless devices (e.g., iPads) 212 can be connected to the cabin WiFi access point 202 via the link 214, by the operator providing an acceptable (e.g., WPA2-Enterprise) certificate. However, in order for a wireless device 212 to access the avionics system 224, the wireless device 212 must then access the firewall 228 of the ground-based network 208 by providing an acceptable signing certificate 230 (or other suitable form of authentication) to verify the identity of the wireless device 212 that is requesting the access. Notably, the wireless devices 212 are unable to access the Onboard Gateway 220 and thus the avionics system 224 directly while the aircraft is in flight. However, the wireless devices 212 are able to access the open Internet services (204) via the cabin access point 202 and the open link 206 while the aircraft is in flight.

On the other hand, the wireless devices or iPads 212 (e.g., utilizing their avionics applications) are able to access the avionics system 224 utilizing, for example, a signing certificate 230 to access the ground-based server 208. The ground-based server 208 can relay requests and data from authorized or approved wireless devices 212 to the electronics system 224 via the Onboard Gateway 220. Notably, in this embodiment, the bi-directional communications between the network 208 and the Onboard Gateway 220 are secured within the secure communications link (e.g., utilizing VPN or other suitable, secure communications link) 222 as the communications pass through the cabin SATCOM system 203. As such, in this embodiment, the authorized or approved communications between the ground-based network 208 and the electronics system 224 are carried entirely on secure communication links.

One advantage of system 200 is that it provides a single SSID-based connection for operators to access both the Internet services and the electronics system. Furthermore, the wireless devices 212 can advantageously be connected to the cabin WiFi access point 202 utilizing, for example, computer-generated WPA2-Enterpise certificates. Thus, since the wireless devices 212 can utilize signing certificates to access the electronics system 224, the vehicle operators can advantageously connect their wireless devices to the Internet and the electronics system without the need to retain or remember any passwords. However, for example, in one embodiment, in order for the operators' wireless devices to gain access to avionics data, the data has to be relayed to the wireless devices via the ground-based network 208, instead of being directly available to the wireless devices on the aircraft. Furthermore, in this example, the devices utilized to access the open Internet cannot be utilized to connect to the Onboard Gateway 220 to perform on-ground maintenance functions.

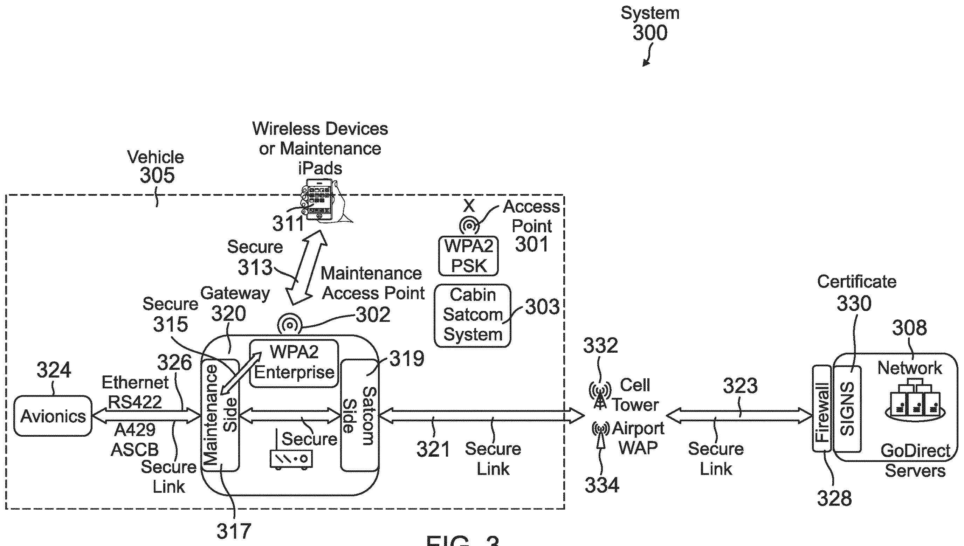

FIG. 3 is a diagram illustrating a third system 300, which can be utilized to implement one example embodiment of the present invention. For example, the exemplary system 300 can be utilized by a crew member or maintenance person to access one or more onboard electronics systems (e.g., avionics system) via a single, communications access point while the vehicle (e.g., aircraft) is not in flight (e.g., in a ground-based maintenance mode of operation). As such, referring to the example embodiment illustrated in FIG. 3, system 300 includes a maintenance access point 302, which in this embodiment, is a WPA2 Enterprise certificate-protected two-way (e.g., input/output) communications port. The maintenance access point 302 is implemented in an Onboard Gateway 320. The maintenance access point 302 operatively communicates with a maintenance side 317 of the Onboard Gateway 320 via a secure communications link (e.g., VPN or other suitable, secure communication link) 315. The maintenance side 317 of the Onboard Gateway 320 operatively communicates with an electronics (e.g., avionics) system 324 via a secure communications link 326. The secure communications link 326 can be, for example, an Ethernet, RS422, A429, or ASCB secure communications link. In the example embodiment illustrated in FIG. 3, a cabin WiFi access point 301 is shown in a SATCOM system 303. However, as indicated in FIG. 3, the cabin access point 301 is inoperable when the aircraft is in a maintenance mode of operation. The SATCOM side 319 of the Onboard Gateway 320 operatively communicates with a cellular communications network 332 or an Airport Secure WiFi Network wireless access point (WAP) network 334 via a secure communications link (e.g., VPN) 321. The cellular communications network 332 and/or the airport WAP network 334 operatively communicate(s) with a ground-based or Cloud-based server 308 via a secure communications link (e.g., VPN) 323 and a firewall 328. Notably, in this embodiment, although the secure links 321 and 323 are shown as separate links for ease of understanding, these links 321/323 function to form a single, secure link 321/323 that passes seamlessly via the cellular communications network 332 or the WAP network 334. One or more wireless devices 311 (e.g., maintenance iPads, tablets, personal computers and the like) operatively communicate (e.g., wirelessly) with the maintenance access point 302 via a secure communication link 313.

In an example operation of system 300, in one embodiment, the one or more maintenance wireless devices (e.g., iPads) 311 can be connected to the maintenance access point 302 via the secure link 313, by providing an acceptable, digital (e.g., WPA2-Enterprise) certificate. The one or more maintenance devices 311 can then access the avionics system 324 via the secure links 315 and 326. The one or more maintenance devices 311 can also cause the vehicle 305 to initiate communications and thereby access the ground-based (or Cloud-based) server 308 by providing an acceptable signing certificate 330 (or other suitable form of authentication) to verify the identity of the aircraft that is requesting the access.

Notably, for this exemplary embodiment, the avionics applications in the wireless maintenance devices 311 are able to access the avionics system 324 utilizing an acceptable WPA2 Enterprise certificate, and can also cause the vehicle 305 to initiate communications and thereby access the ground-based (or Cloud-based) server 308 using an acceptable signing certificate 330 (or other suitable form of authentication). Consequently, since certificates can be utilized in both of the cases described above, the users of the wireless devices 311 are advantageously not required to retain or remember passwords. Also, all of the maintenance communications are advantageously carried entirely on secure communications links.

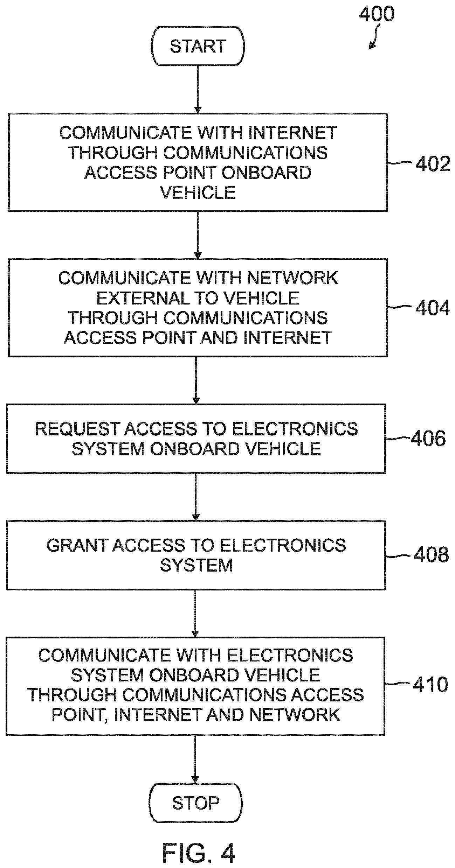

FIG. 4 is a flow diagram illustrating a method 400, which can be utilized to implement one example embodiment of the present invention. Referring to FIGS. 1 and 4 for this example embodiment, the method begins with one or more of the wireless devices 112 or credit/debit card pay devices 116 communicating with the Internet 104 through a communications access point 102 onboard the vehicle 101 (402). The one or more devices 112 or 116 can then communicate with the network 108 external to the vehicle 101 through the communications access point 102 and the Internet 104 via the communication links 114 or 118, 106 and 110 (404). As such, the one or more devices 112 can then forward a request to the network 108 for communications access to an electronics (e.g., avionics) system 124 onboard the vehicle 101 (406). In response, the network 108 can grant the request for communications access to the electronics system 124 (408). The one or more wireless devices 112 can then communicate with the electronics (e.g., avionics) system 124 onboard the vehicle 101 through the communications access point 102, the Internet 104 and the network 108, which is communicatively coupled to the electronics system 124 via the secure link 122, the Gateway 120, and the secure link 126 (410). The flow is then terminated. As such, in accordance with the teachings of the present disclosure, the wireless devices 112 can communicate with the Internet and the electronics system onboard the vehicle (e.g., aircraft) via a single, communications access point.

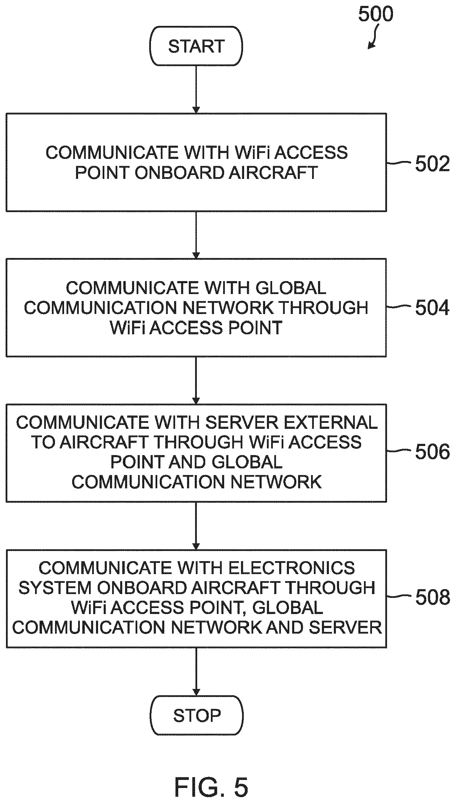

FIG. 5 is a flow diagram illustrating a second method 500, which can be utilized to implement one example embodiment of the present invention. Referring to FIGS. 2 and 5 for this example embodiment, the method begins with one or more of the wireless devices or iPads 212 communicating with a WiFi access point 202 onboard the vehicle (e.g., aircraft) 205 (502). The one or more wireless devices or iPads 212 can then communicate with a global communication network (e.g., the Internet) 204 through the WiFi access point 202 and an open communications link 206 (504). The one or more wireless devices or iPads 212 can then communicate with the server 208 external to the vehicle 205 through the WiFi access point 202 and the global communication network 204 via the communication links 214, 206 and 210 (506). Additionally, the one or more wireless devices or iPads 212 can communicate with an electronics (e.g., avionics) system 224 onboard the vehicle 205 through the WiFi access point 202, the global communication network 204 and the server 208, which is communicatively coupled to the electronics (e.g., avionics) system 224 via the secure link 222, the Gateway 220, and the secure link 226 (508). The flow is then terminated. As such, in accordance with the teachings of the present disclosure, the wireless devices or iPads 212 can communicate with the global communication network and the electronics system onboard the vehicle (e.g., aircraft) via a single, WiFi access point.

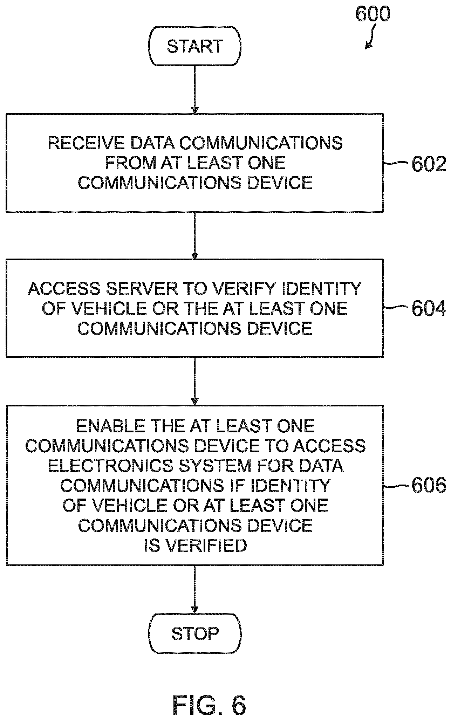

FIG. 6 is a flow diagram illustrating a third method 600, which can be utilized to implement one example embodiment of the present invention. Referring to FIGS. 2 and 6 for this example embodiment, the method begins with the cabin (e.g., WiFi) access point 202 receiving data communications from at least one communications device (e.g., 212 or 216) via the link 214 or 218, by an operator providing an acceptable (e.g., WPA2-Enterprise) certificate (602). However, in order for a communications device 212 or 216 to access the electronic (e.g., avionics) system 224, the communications device 212 or 216 must access the firewall 228 of the ground-based network (e.g., server) 208 by providing an acceptable signing certificate 230 (or other suitable form of authentication) to verify the identity of the vehicle 205 or the at least one communications device 212 or 216 that is requesting the access (604). If the identity of the vehicle 205 or the at least one communications device 212 or 216 is verified, then the ground-based network (e.g., server) enables the at least one communications device 212 or 216 to access the electronics (e.g., avionics) system 224 for data communications therebetween (606). The flow is then terminated. As such, in accordance with the teachings of the present disclosure, the at least one communications device 212 or 216 can communicate with the electronics (e.g., avionics) system onboard the vehicle (e.g., aircraft) via a single access point if the identity of the at least one communications device 212 or 216 or the vehicle involved can be authenticated or verified.

### EXAMPLE EMBODIMENTS

Example 1 includes a system, comprising: a vehicle; a communications access point onboard the vehicle and configured to communicate with the Internet; at least one communications device configured to communicate with the communications access point onboard the vehicle; an electronics system onboard the vehicle; and a network external to the vehicle coupled to the electronics system for communications therebetween and configured to communicate with the Internet, wherein the at least one communications device is enabled to communicate with the Internet through the communications access point, and communicate with the electronics system through the Internet and the network external to the vehicle.
Example 2 includes the system of Example 1, wherein the vehicle is an aircraft.
Example 3 includes the system of any of Examples 1-2, wherein the at least one communications device is at least one of a wireless device, wired device, iPad, iPhone, tablet, personal computer, or portable electronic device.
Example 4 includes the system of any of Examples 1-3, wherein the electronics system is an avionics system.
Example 5 includes the system of any of Examples 1-4, wherein the network is a server.
Example 6 includes the system of any of Examples 1-5, wherein the communications access point is a WiFi access point.
Example 7 includes the system of any of Examples 1-6, wherein the communications access point is a password protected communications port.
Example 8 includes the system of any of Examples 1-7, further comprising a second communications access point onboard the vehicle and configured to communicate with the Internet, wherein the communications access point is password protected with a WiFi Protected Access 2-Pre-Shared Key (WPA2-PSK), and the second wireless access point is a certificate protected WPA2 Enterprise access point.
Example 9 includes the system of any of Examples 1-8, wherein the communications access point is a communications port of an air-to-ground system or satellite communications (SATCOM) system.
Example 10 includes the system of any of Examples 1-9, wherein the network is a ground-based or Cloud-based, signing certificate protected server network.
Example 11 includes a vehicle, comprising: an electronics system onboard the vehicle; a gateway onboard the vehicle and coupled to the electronics system for secured data communications therebetween; and a communications access point onboard the vehicle and coupled to the gateway for data communications therebetween, wherein the communications access point is configured to receive data communications from at least one communications device, and responsive to the data communications, access a ground-based or Cloud-based server to verify an identity of the vehicle or an identity of the at least one communications device, and if the identity of the vehicle or the identity of the at least one communications device is verified, enable the at least one communications device to access the electronics system for data communications therebetween.
Example 12 includes the vehicle of Example 11, wherein the vehicle is an aircraft on the ground.
Example 13 includes the vehicle of any of Examples 11-12, wherein the communications access point is a maintenance access point, and the at least one communications device is a maintenance iPad, tablet or personal computer (PC).
Example 14 includes the vehicle of any of Examples 11-13, wherein the gateway is configured to receive the data communications from the at least one communications device, and responsive to the data communications, access the ground-based or Cloud-based server to verify an identity of the vehicle or the at least one communications device.
Example 15 includes a method, comprising: communicating with the Internet through a communications access point onboard a vehicle; communicating with a network external to the vehicle through the communications access point and the Internet; requesting communications access to an electronics system onboard the vehicle; granting the communications access to the electronics system responsive to the requesting; and communicating with the electronics system onboard the vehicle through the communications access point, the Internet and the network.
Example 16 includes the method of Example 15, wherein the communicating with the Internet through the communications access point comprises coupling at least one wireless device to the Internet through a wireless access point.
Example 17 includes the method of any of Examples 15-16, wherein the communicating with the electronics system comprises coupling at least one wireless or wired communications device to the electronics system through the communications access point, the Internet, and a server.
Example 18 includes the method of any of Examples 15-17, wherein the communicating with the electronics system onboard the vehicle comprises coupling at least one wireless or wired device to the electronics system through a second communications access point onboard the vehicle, the Internet, and a ground-based server.
Example 19 includes the method of any of Examples 15-18, wherein the communicating with the Internet comprises communicating with a WiFi access point onboard an aircraft, and communicating with the Internet through the WiFi access point.
Example 20 includes the method of any of Examples 15-19, wherein the communicating with the network external to the vehicle comprises a WiFi device communicating with the Internet through a WiFi access point, and communicating with a server through the WiFi access point and the Internet.

It should be understood that elements of the above described embodiments and illustrative figures may be used in various combinations with each other to produce still further embodiments which are explicitly intended as within the scope of the present disclosure.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the presented embodiments. Therefore, it is manifestly intended that embodiments be limited only by the claims and the equivalents thereof.

## Claims

1. A system, comprising:
a vehicle;
a communications access point onboard the vehicle and configured to communicate with the Internet;
an electronics system onboard the vehicle; and
a network external to the vehicle coupled to the electronics system for secured communications therebetween and configured to communicate with the Internet, wherein the communications access point is enabled to communicate with the electronics system through the Internet and the network external to the vehicle.

2. The system of claim 1, wherein the vehicle is an aircraft.

3. The system of claim 1, wherein the communications access point is enabled to receive data communications from a wireless communication device or a wired communication device.

4. The system of claim 1, wherein the electronics system is an avionics system.

5. The system of claim 1, wherein the network is a ground-based server.

6. The system of claim 1, wherein the communications access point is a WiFi access point.

7. The system of claim 1, wherein the communications access point is a password protected communications port.

8. The system of claim 1, further comprising a second communications access point onboard the vehicle and configured to communicate with the Internet, wherein the communications access point is password protected with a WiFi Protected Access 2-Pre-Shared Key (WPA2-PSK), and the second wireless access point is a certificate protected WPA2 Enterprise access point.

9. The system of claim 1, wherein the communications access point is a communications port of an air-to-ground system or satellite communications (SATCOM) system.

10. The system of claim 1, wherein the network is a ground-based or Cloud-based, signing certificate protected server network.

11. A vehicle, comprising:
an electronics system onboard the vehicle;
a gateway onboard the vehicle and coupled to the electronics system for secured data communications therebetween; and
a communications access point onboard the vehicle and coupled to the gateway for data communications therebetween, wherein the communications access point is configured to receive data communications from at least one communications device, and responsive to the data communications, access a ground-based or Cloud-based server to verify an identity of the vehicle or an identity of the at least one communications device, and if the identity of the vehicle or the identity of the at least one communications device is verified, enable the at least one communications device to access the electronics system for data communications therebetween.

12. The vehicle of claim 11, wherein the vehicle is an aircraft on the ground.

13. The vehicle of claim 11, wherein the communications access point is a maintenance access point, and the at least one communications device is a maintenance wireless device, tablet or personal computer (PC).

14. The vehicle of claim 11, wherein the communications access point is a WPA2 Enterprise certificate protected communications access point.

15. A method, comprising:
communicating with the Internet through a communications access point onboard a vehicle;
communicating with a network external to the vehicle through the communications access point and the Internet;
requesting communications access to an electronics system onboard the vehicle;
granting the communications access to the electronics system responsive to the requesting; and
communicating with the electronics system onboard the vehicle through the communications access point, the Internet and the network.
